(19)

Europäisches
Patentamt
European
Patent Office
Office européen
des brevets

(11) **EP 3 486 769 A1**

(12) **EUROPEAN PATENT APPLICATION**

(43) Date of publication:
**22.05.2019 Bulletin 2019/21**

(51) Int Cl.:
**G06F 9/445** (2018.01)   *G06F 8/30* (2018.01)

(21) Application number: **18195155.9**

(22) Date of filing: **18.09.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.11.2017 CN 201711158976**

(71) Applicant: **Guangdong OPPO Mobile
Telecommunications Corp., Ltd.
Dongguan, Guangdong 523860 (CN)**

(72) Inventor: **CHEN, Yan
Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(54) **METHOD FOR PRELOADING APPLICATION, TERMINAL DEVICE, AND MEDIUM**

(57)    A method for preloading an application, a terminal device, and a medium are provided. The method for preloading an application includes the following. An application predictive model is obtained by training a long short-term memory (LSTM) neural network model according to multiple groups of usage timing association records. Usage status information of applications of a terminal of at least two past time points of a next time point is acquired. Probability values of launching the applications are acquired from the application predictive model by processing the usage status information of the applications with the application predictive model. An application to-be-launched at the next time point is determined according to the probability values and the application to-be-launched is preloaded.

**EP 3 486 769 A1**

## Description

TECHNICAL FIELD

This application relates to the technical field of machine learning, and more particularly to a method for preloading an application, a terminal device, and a medium.

BACKGROUND

With rapid development of electronic technologies and continuing improvement of people's living standard, terminals such as smart phones and tablet PCs have become an indispensable part of people's lives.

The terminal may be installed with various applications (application software, APP). In order to make the applications run more smoothly, the terminal can prepare loading resources for some applications in advance, that is, preload some applications in advance.

However, the applications cannot be preloaded at will, because if too many resources are preloaded, it will take up too much storage space and power consumption will become large, which will seriously affect fluency of the terminal. Therefore, it is important to optimize preloading mechanisms and reduce the power consumption of the terminal.

SUMMARY

According to embodiments of the disclosure, a method and an apparatus for establishing an application predictive model, a method and an apparatus for preloading an application, a medium, and a terminal are provided, which can optimize application preloading mechanisms and reduce the power consumption of a system of the terminal.

According to a first aspect of the disclosure, a method for preloading an application is provided. An application predictive model is obtained by training a long short-term memory (LSTM) neural network model according to a plurality of groups of usage timing association records. Usage status information of applications of a terminal of at least two past time points of a next time point is acquired. Probability values of launching the applications are acquired from the application predictive model by processing the usage status information of the applications with the application predictive model. An application to-be-launched at the next time point is determined according to the probability values and the application to-be-launched is preloaded.

According to a second aspect of the disclosure, a terminal device is provided. The terminal device includes at least one processor and a computer readable storage. The computer readable storage is coupled to the at least one processor and stores at least one computer executable instruction thereon which, when executed by the at least one processor, causes the at least one processor to carry out the follows. Usage status information of applications of a terminal of at least two past time points of a next time point is acquired. Probability values of launching the applications is acquired from an application predictive model, by inputting the usage status information into the application predictive model, the application predictive model is obtained based on a long short-term memory (LSTM) neural network model and a plurality of groups of usage timing association records. An application to-be-launched at the next time point is determined according to the probability values and the application to-be-launched is preloaded.

According to a third aspect of the disclosure, non-transitory computer readable storage medium is provided. The non-transitory computer readable storage medium stores a computer program which, when executed by a processor, causes the processor to carry out the follows. A user behavior sample within a preset time period is acquired, and the user behavior sample includes usage timing association records of at least two applications. A plurality of groups of usage timing association records are obtained by grouping the usage timing association records. An application predictive model is obtained by training a LSTM neural network model according to the plurality of groups of usage timing association records.

BRIEF DESCRIPTION OF THE DRAWINGS

FIG. 1 is a schematic flow chart illustrating a method for establishing an application predictive model according to an embodiment of the disclosure.

FIG. 2 is a schematic diagram illustrating a process of grouping usage timing association records in the form of a sliding window according to an embodiment of the disclosure.

FIG. 3 is a schematic structural diagram illustrating one LSTM structural unit of an application predictive model trained according to a LSTM network according to an embodiment of the disclosure.

FIG. 4 is a schematic structural diagram illustrating an application predictive model constructed according to a LSTM network according to an embodiment of the disclosure.

FIG. 5 is a schematic flow chart illustrating a method for establishing an application predictive model according to another embodiment of the disclosure.

FIG. 6 is a schematic flow chart illustrating a method for establishing an application predictive model according to yet another embodiment of the disclosure.

FIG. 7 is a schematic flow chart illustrating a method for preloading an application according to an embodiment of the disclosure.

FIG. 8 is a schematic structural diagram illustrating an apparatus for establishing an application predictive model according to an embodiment of the disclosure.

FIG. 9 is a schematic structural diagram illustrating an apparatus for preloading an application according to an embodiment of the disclosure.

FIG. 10 is a schematic structural diagram illustrating a terminal according to an embodiment of the disclosure.

FIG. 11 is a schematic structural diagram illustrating a terminal according to another embodiment of the disclosure.

FIG. 12 is a schematic structural diagram illustrating a terminal according to yet another embodiment of the disclosure.

DETAILED DESCRIPTION

Technical solutions of the present disclosure will be further described below through embodiments with reference to the accompanying drawings. It will be appreciated that the embodiments are described herein for the purpose of explaining the disclosure rather than limiting the disclosure. In addition, it should also be noted that, for the convenience of description, only some rather than all structures related to the present disclosure are illustrated in the accompanying drawings.

Before discussing the exemplary embodiments in more detail, it should be mentioned that some exemplary embodiments are described as processes or methods of a flow chart. Although steps in the flow chart are depicted as being processed sequentially, some of these steps may be performed in parallel, concurrently, or simultaneously. In addition, the order of the steps can be rearranged. The process may be terminated when a corresponding operation(s) is completed, but there may be additional steps not illustrated in the drawings. The process may correspond to a method, a function, a procedure, a subroutine, a subprogram, and the like.

Preloading an application on a terminal device is a common and effective way to improve the user experience. By making the loading resources for some applications ready in advance, it makes the applications run more smoothly.

In the related art, the application is preloaded mainly based on a statistical method. For example, there may be only a few applications most frequently used by a user, and all of them may be preloaded. For another example, applications may be scored and ranked according to the user's usage habits, applications with higher scores may be preloaded. However, the above method ignores association information of the applications and time information, which leads to insufficient prediction accuracy of the application to be preloaded and needs to preload too many resources; actually, only one application will be used next time, that is, at a next time point, so this affects the user experience. Therefore, it's important to accurately predict which applications the user will launch next time.

Embodiments of the disclosure provide technical schemes for preloading an application. Initially, an application predictive model needs to be obtained, which can be transplanted to a terminal device such as a smart device, for the purpose of predicting an application to-be-launched in the future, such that the terminal device can preload the application to-be-launched according to the prediction of the model. For example, if it is necessary to predict the user behavior at the next moment, obtain the usage status information of the user in several past moments (such as five past moments) and input it to the model, and then calculation will be conducted in the model to obtain the predicted value of the next moment, that is, the application the user will use next time, thus, it is possible to achieve application preloading.

In order to obtain the application predictive model, usage timing association records, which can be comprehended as a usage behavior sample, can be constructed for applications selected. Then the usage timing association records or other information derived there from can be used to train neural network model, to obtain the application predictive model.

Technical schemes of the disclosure can speed up the loading of applications without taking up too much resources and storage spaces, which can in turn speed up processor processing of terminal devices. In addition, the implementation of the technical schemes provided herein, such as generating the application predictive model and preloading an application, do not require manual intervention. The following aspects of the disclosure contribute to it advantages, and each will be described in detail below.

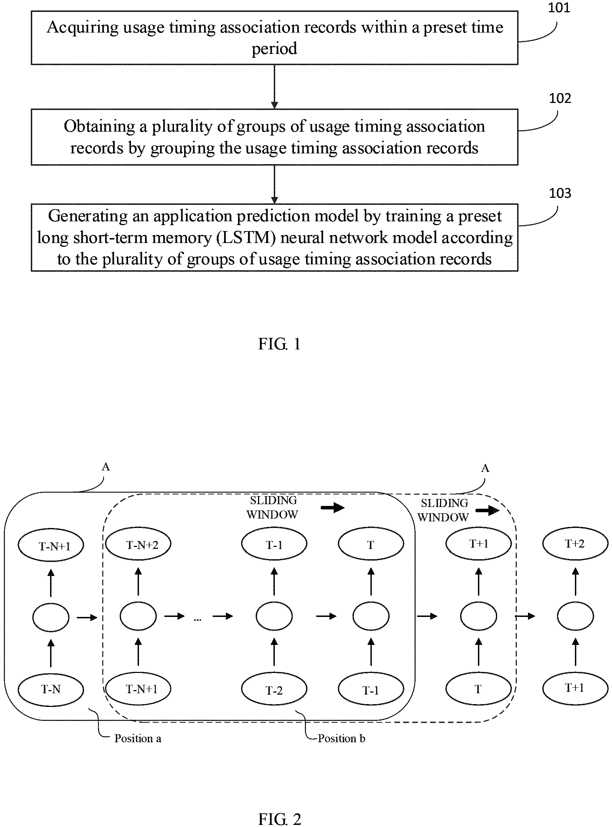

Embodiments of the disclosure first provide a method for establishing an application predictive model, which is embodied as follows. Usage timing association records within a preset time period are acquired. Multiple groups of usage timing association records are obtained by grouping the usage timing association records. An application predictive model is generated by training a preset long short-term memory (LSTM) neural network model according to the multiple groups of usage timing association records. Implementation of the method will be depicted with reference to FIG. 1.

FIG. 1 is a schematic flow chart illustrating a method for establishing an application predictive model according to an embodiment of the disclosure. The method can be implemented by an apparatus for establishing an application predictive model. The apparatus can be implemented with software and/or hardware and generally can be integrated into a terminal. The terminal may be a server or a mobile terminal. The server for example is a modeling server for completing a function of establishing an application predictive model. As illustrated in FIG. 1, the method begins at block 101.

At block 101, usage timing association records of at least two applications within a preset time period are acquired.

The following describes a statistical process of user behavior, which aims to determine target applications (that is, the at least two applications) subsequently analyzed.

In embodiments of the disclosure, the usage timing association records refer to historical usage timing association records of applications of the terminal within the preset time period. For example, the usage timing association records may be the records of the applications of the terminal between 8:00 am to 20:00 pm. In one implementation, the user used APP 1 at about 8:00 am, turned to APP 2 from APP 1 at about 8:30 am, and turned to APP 3 from APP 2 around 9:00 am. In another implementation, the user used APP 5 at about 11:40 am and turned to APP 5 from APP 4 at about 12:00 am. As can be seen, the usage timing association records of the applications contain usage records of the applications at various time points as well as timing relationship between the applications.

Although a variety of applications are installed on the terminal, the number of applications used by the user is limited during a preset period of time, such as one day, and the number of applications frequently used by the user is also limited. Most applications are used less frequently, and can be used once by the user within a week or even a month. If using all applications installed on the terminal as training samples for an application predictive model, not only the amount of data is large, but also the precision of establishing the application predictive model will be affected, which will affect the prediction accuracy for an application to-be-launched by the user at a next time point.

In one implementation, the usage timing association records of at least two applications within the preset time period are acquired as follows. Applications are sorted according to frequencies of use thereof within the preset time period. At least two applications are determined according to a sorting result. Usage timing association records are determined according to usage status information of the at least two applications. In this way, the amount of data for training samples when establishing the application predictive model can be greatly reduced, and the precision and efficiency of establishing the application predictive model can be improved, thus further improving the accuracy of predicting an application to-be-launched.

The preset time period is from 8:00 am to 22:00 pm for example, and frequencies of use of applications within this preset time period are counted. The applications can be sorted according to the frequencies of use thereof, for example, the applications can be sorted in descending order of the frequencies. According to a sorting result, first $M$ applications are selected as target applications, that is, the first $M$ applications are determined as frequently used applications, where $M \geq 2$. Further, usage timing association records can be determined according to usage status information of the $M$ applications, where the usage timing association records record usage of the $M$ applications at each time point within the preset time period. The usage timing association records contain usage information of the $M$ applications and corresponding time points when the $M$ applications are used, and further contain timing relationship of usage of the $M$ applications.

It is to be noted that when using the applications on the terminal, invalid usage records of applications may be generated due to accidental operations of the user. For example, the user is intended to trigger APP 1 but mistakenly clicked on APP 2, and in this case, the user may quickly exit APP 2. However, the accidental operation also generates some usage records, which can also affect the precision of establishing the application predictive model, thus affecting the accuracy of predicting an application that will be launched next time point by the user.

In view of the above, the invalid application usage records may be filtered out from historical usage records of the applications within the preset time period. In one implementation, if an application is used less than a preset time period, usage records of the application will be filtered out. For example, if the user uses application A for 3 seconds (3s for short) and the preset time period is 5s, the usage record in which application A is used for 3s will be filtered out, that is, removed or deleted. In this way, the precision of establishing the application predictive model and the accuracy of predicting an application to-be-launched can be effectively improved.

It should be noted that the invalid usage records of the applications can be first filtered out from the historical usage records of the applications before determining the target applications (the frequently used applications) according to the frequencies of use of the applications. Alternatively, the target applications (the frequently used applications) can be first determined according to the frequencies of use of the applications and then the invalid usage records of the applications are filtered out. The order of the operations of filtering out the invalid usage records of the applications and determining the target applications according to the frequencies of use of the applications are not limited herein.

In one embodiment, the usage timing association records can be determined according to the usage status information of the at least two applications as follows. A usage log or usage logs (can be comprehended as a user behavior sequence) of the at least two applications are sampled according to a preset sampling period to determine whether the at least two applications are in use at sampling time points. The usage timing association records are determined by associating the usage status information of the at least two applications according to the sampling time points. In this way, it is possible to acquire the usage timing association records of the applications within the preset time period more flexibly, improve the precision of establishing the application predictive model, and further improve the accuracy of predicting an application to-be-launched.

In one implementation, the usage log of the at least two applications in the preset time period are first sampled from the initial time of the preset time period, and are further sampled every three minutes. For example, the preset time period is from 8:00 am to 12:00 am, then the first sampling can be executed at 8:00 am, the second sampling can be executed at 8:03 am, the third sampling can be executed at 8:06 am, and so on, until the usage log of the at least two applications within the preset time period are all sampled. In one implementation, the preset sampling period is set according to a length of the preset time period; for example, if the preset time period is long, the preset sampling period can be adaptively set longer; if the preset time period is short, the preset sampling period can be adaptively set shorter. In another implementation, the preset sampling period can be adaptively set according to user requirements; for example, if an application to-be-launched requires high prediction accuracy, the preset sampling period can be set shorter; if an application to-be-launched requires low prediction accuracy, the preset sampling period can be set longer. In still another implementation, the preset sampling period can be set according to the terminal's ability to process data; for example, if the terminal has large ability to process the data amount for training samples during establishing the application predictive model, the preset sampling period can be set shorter; if the terminal can have less ability to process the data amount for training samples during establishing the application predictive model, the sampling period can be set longer. The disclosure does not limit the length and setting manners of the preset sampling period.

In this embodiment, usage status information of each application at each sampling time point is determined. It should be noted that at one sampling time point, there is only one application in use, or no application is in use, for example, the terminal is in desktop display status or the terminal is screen-off. Thereafter, the usage timing association records are determined by associating the usage status information of the at least two applications according to the sampling time points and the usage status information. As an example, application A is in use at a first sampling time point, application B is in use at a second sampling time point, the terminal is screen-off at a third sampling time point, indicating that no application is in use, and application C is in use at a fourth sampling time point and so on. Based on the above, the usage timing association records can be determined by associating the usage status information of the at least two applications according to the sampling time points and the usage status information.

Optionally, usage association records of the applications can be recorded in the form of identification information of the sampling time points and usage status information, in other words, identification of usage status. As an example, M applications are respectively marked with 1, 2,..., and M in descending order of frequencies of use, and if no application is in use at a sampling time point, use M+1 to indicate such situation.

In one implementation, a user behavior sequence is obtained by ranking, or additionally, filtering, usage records of applications. For example, the user behavior sequence includes usage records of M frequently used applications marked with 1, 2, ...., and M (top M frequently used applications). Sampling is then performed on the user behavior sequence with a sampling interval of 3 *min* for example. If the terminal device is screen-off (that is, the screen is powered off) at some sampling time points, it indicates that currently there is no application in use, and "M+1" will be used to mark such situation; otherwise, if the terminal device is screen-on (that is, the screen is powered on) at some sampling time points, the marked number (1, 2, ...., or M) of the application in use at the most recent time point prior to the sampling time point will be recorded. In this way, the final user behavior sequence, that is, the usage timing association records, can be obtained.

It can be understood that by using 1, 2, ..., *M,* and *M+1* as the identification information of the usage status of the applications, the usage association records of the applications can be recorded according to the identification information corresponding to the usage status information of the applications at the sampling time points. The disclosure does not particularly limit representation manners of the usage association records as long as unique information can represent the usage status information of different applications at different sampling time points.

At block 102, multiple groups of usage timing association records are obtained by grouping the usage timing association records.

In one implementation, the usage timing association records of the at least two applications within the preset time period are grouped to obtain the multiple groups of usage timing association records. In particular, the usage timing association records can be grouped according to timing relationship. It is understood that, the usage timing association records can be grouped according to the timing relationship to obtain multiple usage timing association sub-records, which can be treated as the multiple groups of usage timing association records. During grouping, the preset time period can be divided into several sub-time periods equally and the usage timing association records can be grouped according to the sub-time periods to obtain the multiple usage timing association sub-records as usage timing association records of the applications corresponding to the sub-time periods. In another implementation, the preset time period can be divided into several sub-time periods that are not completely equal or are completely unequal, and the usage timing association records can be grouped according to the sub-time periods thus divided. In still another implementation, in the process of grouping, the usage timing association records can be grouped in the form of a sliding window. As an example, a fixed-size sliding window with equal step size (step size refers to the length of time the window moves forward each time) or unequal step size can be applied to the usage timing association records of the applications within the preset time period, that is, the fixed-size sliding window moves forward over the usage timing association records of the applications within the preset time period, and usage timing association records corresponding to the sliding window at each position are determined as a group of usage timing association records. As another example, the sliding window can be scaled with different scales, the sliding window is scaled once every time it slides, multiple-scale sliding window with equal step size or unequal step size can be applied to the usage timing association records of the applications within the preset time period, and usage timing association records corresponding to the sliding window at each position are determined as a group of usage timing association records.

In one implementation, the usage log of the at least two applications can be sampled according to the preset sampling period, such that the usage timing association records of the at least two applications determined according to the sampling time points and the usage status information corresponding to the sampling time points can be grouped, to obtain the multiple groups of usage timing association records. For instance, the usage timing association records of the at least two applications within the preset time period can be grouped according to the timing relationship of the sampling time points and the number of the sampling time points. The sampling time points within the preset time period can be divided into several groups of sampling time points according to the timing relationship, and the number of sampling time points in each group can be exactly equal, not exactly equal, or completely unequal. Usage timing association records corresponding to each group of sampling time points can be determined as a group of usage timing association records. During grouping, the usage timing association records determined according to the sampling time points and the usage status information of the at least two applications corresponding to the sampling time points can also be grouped in the form of a sliding window. As an example, apply a fixed-size sliding window or multiple-scale sliding window with equal step size or unequal step size to the usage timing association records, such that usage timing association records corresponding to the sliding window at each position can be determined as a group of usage timing association records, where one step size can be deemed as one sampling time point. FIG. 2 is a schematic diagram illustrating a process of grouping usage timing association records in the form of a sliding window according to an embodiment of the disclosure. As illustrated in FIG. 2, sliding window A is size fixed and a step size of sliding window A is one sampling time point, in particular, $T-n+1$, $T-n,...$, $T$, $T+1$, and $T+2$ in FIG. 2 all indicate sampling time points. As can be seen from FIG. 2, sliding window A moves from the very left of the usage timing association records to the very right. Each time the sliding window moves rightwards by one position, and the usage timing association records corresponding to the sliding window at each position are determined as one group of usage timing association records. In FIG.2, the usage timing association records correspond to sampling time point $T-n+1$ to sampling time point $T$, that is, when the sliding window is at position a, is determined as one group of usage timing association records; the usage timing association records correspond to sampling time point $T-n+2$ to sampling time point $T+1$, that is, when the sliding window is at position b, is determined as another group of usage timing association records.

In one implementation, the multiple groups of usage timing association records are (m-n+1) groups of usage timing association records, n indicates the number of sampling time points associated with each group of usage timing association records and is an integer greater than or equal to 2, and m indicates the total number of sampling time points in the preset sampling period and is an integer greater than or equal to 3, where the $i^{th}$ group of usage timing association records includes usage timing association records of the at least two applications at the $i^{th}$ to the $(i+n-1)^{th}$ sampling time point, and $i$ is an integer and ranges from 1 to (m-n+1).

In one implementation, usage timing association records of the at least two applications at the first to the $n^{th}$ sampling time point can be determined as a first group of usage timing association records, usage timing association records of the at least two applications at the second to the $(n+1)^{th}$ sampling time point can be determined as a second group of usage timing association records, and the $(m-n+1)^{th}$ group of usage timing association records can be determined in the above manner, where $n$ is a natural number greater than or equal to 2 and $m$ indicating the number of sampling time points is a natural number greater than or equal to 3. In this way, the sliding window is applied to the entire usage timing association records and any situation where usage status information switch may occur will not be missed, as a result, usage status information miss rate of the usage timing association records of the at least two applications within the preset time period is extremely low. Thus, the precision of establishing the application predictive model and the accuracy of predicting an application can be effectively improved.

As an example, usage timing association records of the at least two applications at the first to the $n^{th}$ sampling time point can be determined as a first group of usage timing association records, usage timing association records of the at least two applications at the second to the $(n+1)^{th}$ sampling time point can be determined as a second group of usage timing association records, and so on, and the $(m-n+1)^{th}$ group of usage timing association records can be determined in the above manner, where $n$ is a natural number greater than or equal to 3 and $m$ indicating the number of sampling time points is a natural number greater than or equal to 4. For example, suppose $n=5$ and $m=8$, that is, usage timing association records of the at least two applications within the preset time period correspond to eight sampling time points, and usage timing association records corresponding to every five sampling time points according to the timing relationship can be determined as a group of usage timing association records. In particular, usage timing association records at the first to the fifth sampling time point can be determined as a first group of usage timing association records, usage timing association records at the second to the sixth sampling time point can be determined as a second group of usage timing association records, usage timing association records at the third to the seventh sampling time point can be determined as a third group of usage timing association records, and usage timing association records at the fourth to the eighth sampling time point can be determined as a fourth group of usage timing association records.

At block 103, an application predictive model is generated by training a preset long short-term memory (LSTM) neural network model according to the multiple groups of usage timing association records.

In one implementation, the application predictive model can be generated by training the LSTM neural network model (hereinafter referred as LSTM network) by using the multiple groups of usage timing association records as training samples.

The LSTM network is a variant of a recurrent neural network (RNN). In other words, the LSTM network is a special type of RNN. The LSTM network can deal with the exploding and vanishing gradient problems that may be encountered when training simple RNN.

In one implementation, usage status information corresponding to sampling time points in multiple groups (at least two groups) of usage timing association records are used as the training samples, which are input into the LSTM network for training. That is, the usage status information of the applications corresponding to the sampling time points in the multiple groups of usage timing association records can be used as the training samples to train the LSTM network, to generate the application predictive model. The multiple groups of usage timing association records are obtained by grouping the usage timing association records of the at least two applications within the preset time period at block 102.

The application predictive model includes an input gate $i_t$, a forget gate $f_t$, an output gate $o_t$, a candidate memory cell $\tilde{c}_t$, a final memory cell $c_t$, and an output status cell $h_t$, which are expressed as follows:

$$i_t = \sigma(W_i x_t + U_i h_{t-1}) \qquad (1)$$

$$f_t = \sigma(W_f x_t + U_f h_{t-1}) \qquad (2)$$

$$o_t = \sigma(W_o x_t + U_o h_{t-1}) \qquad (3)$$

$$\tilde{c}_t = \tanh(W_c x_t + U_c h_{t-1}) \qquad (4)$$

$$c_t = f_t \otimes c_{t-1} + i_t \otimes \tilde{c}_t \qquad (5)$$

$$h_t = o_t \otimes \tanh(c_t) \qquad (6)$$

where $x_t$ indicates an application used at time point $t$ in the usage timing association records, $W_*$ and $U_*$ indicate network parameters learned, $* \in \{i, f, o, c\}$, $i_t$ indicates an input gate at time point $t$, $f_t$ indicates a forget gate at time point $t$, $o_t$ indicates an output gate at time point $t$, $c_t$ indicates a final memory cell at time point $t$, $c_{t-1}$ indicates a final memory cell at time point $t$-$1$, $\tilde{c}_t$ indicates a candidate memory cell at time point $t$, $h_t$ indicates an output status cell at time point $t$, $h_{t-1}$ indicates an output status cell at time point $t$-$1$, $\sigma$ indicates a Sigmoid function, $\otimes$ indicates element-wise product of vectors, and the *tanh* function is expressed as

$$f(x) = \tanh(x) = \frac{e^x - e^{-x}}{e^x + e^{-x}}.$$

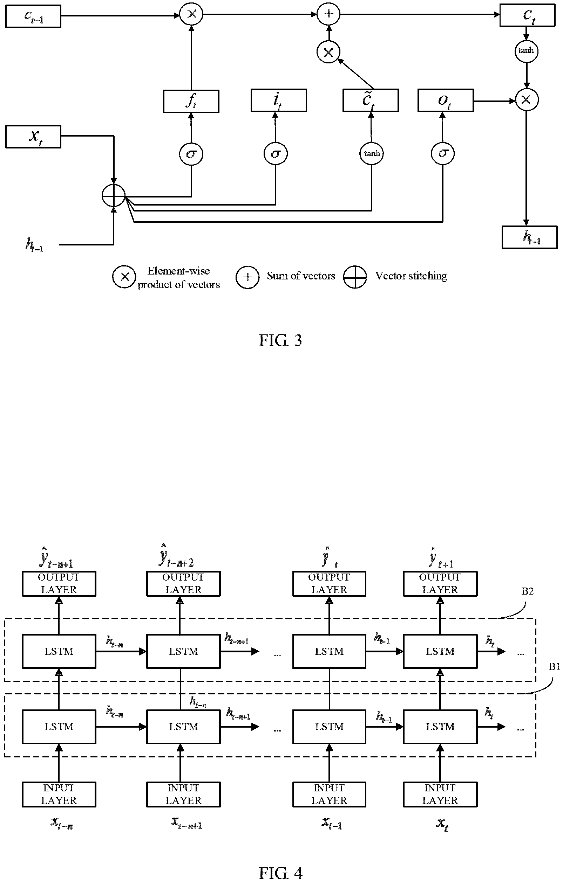

FIG. 3 is a schematic structural diagram illustrating one LSTM structural unit of an application predictive model trained according to a LSTM network according to an embodiment of the disclosure.

In the application predictive model, $x_t$ indicates usage status information of the applications at time point $t$ in the usage timing association records. At the same time point (such as at time point $t$), usage status information of the applications is uniquely determined. That is, only one application is in use or no application is in use at one time point and therefore, $x_t$ is expressed in the form of a one-hot code vector. As an example, the target applications include $M$ applications, for convenience, the $M$ applications are marked with 1, 2,..., and $M$ respectively. In addition, if no application is in use, usage status information is marked with $M+1$. For example, $M$ =10 and an application marked with 7 is in use at time point $t$, then a predicted code vector at time point $t$ is [0,0,0,0,0,0,1,0,0,0,0], that is, in the predicted code vector, an element corresponding to the application marked with 7 is 1, and the rest elements are all 0.

In addition, the input gate $i_t$, the forget gate $f_t$, and the output gate $o_t$ each has a value of {0,1}, where "0" indicates that the gate (the input gate, the forget gate, or the output gate) is off and no information is allowed to pass, and "1" indicates that the gate (the input gate, the forget gate, or the output gate) is on and all information is allowed to pass. As illustrated in the above formulas (1) - (3), the input gate $i_t$, the forget gate $f_t$, and the output gate $o_t$ are calculated according to usage status information $x_t$ (expressed as a one-hot code vector) of the applications input at time point $t$ and an output status $h_{t-1}$

at a previous time point (that is, time point *t-1*). The forget gate $f_t$ controls how much information each memory cell needs to forget at time point *t*, that is, evaluate importance of memory information of usage status information of the applications input before time point *t* (historical usage status information) to usage status information of the applications input at time point *t* (at the current time). The historical usage status information discarded or forgotten by the forget gate $f_t$ decreases with increasing importance of the historical usage status information to the usage status information input at time point *t* (current time point); on the contrary, the historical usage status information discarded or forgotten by the forget gate $f_t$ increases with decreasing importance of the historical usage status information to the usage status information input at time point *t*. The input gate $i_t$ controls how much information needs to be added to each memory cell at time point *t*, that is, the input gate $i_t$ determines whether the usage status information of the applications input at time point *t* (current time point) is important. The output gate $o_t$ controls how much information each memory cell needs to output at time point *t*, that is, information associated with the usage status information of the applications input at time point *t* is extracted from an output status cell (a hidden status cell) at time point *t-1*.

The final memory cell $c_t$ at time point *t* can be obtained from the forget gate $f_t$ and the input gate $i_t$ as illustrated in formula (5). That is, according to a result of the forgetting gate $f_t$, memory $c_{t-1}$ of the last time point (time point *t-1*) can be reasonably forgotten, and according to the input gate $i_t$ and candidate memory at time point *t* (current time point), new memory at the current time can be obtained as the final memory cell $c_t$. In one implementation, $f_t = 0$, $i_t = 1$, the final memory cell $c_t$ has no historical information, that is, the usage status information before time point *t* (the historical usage status information) of the applications is cleared and the candidate memory cell $\tilde{c}_t$ is written in to obtain the final memory cell $c_t$. In this case, the final memory cell $c_t$ is still associated with the usage status information at the last time point (time point *t-1*). In another implementation, $f_t = 1$, $i_t = 0$, the final memory cell $c_t$ will directly copy relevant memory contents at the last time point without writing the new usage status information of the applications. After obtaining the final memory cell $c_t$ at time point *t*, an output status $h_t$ at the current time can be obtained by using the output gate $o_t$ as illustrated in formula (6).

In one implementation, during generating the application predictive model by training the LSTM network according to the multiple groups of usage timing association records, the number of cells of an input layer of the application predictive model can be determined according to vector dimensions of each group of usage timing association records, and the number of cells of an output layer of the application predictive model can be determined according to the number of the at least two applications. That is, the number of cells of the input layer of the application predictive model can be determined according to the vector dimensions of each group of usage timing association records and the number of cells of the output layer of the application predictive model can be determined according to the number of the at least two applications.

The LSTM network includes the input layer, a hidden layer (that is, LSTM cell layer), and the output layer. The hidden layer may include multiple LSTM cell layers. Each LSTM cell layer may include multiple LSTM cell structures. The number of LSTM cell structures in each LSTM cell layer can be determined according to the number of sampling time points contained in each usage timing association record. In one implementation, the application predictive model contains two LSTM cell layers. One LSTM cell layer contains 32 neurons and the other LSTM cell layer contains 50 neurons. As an example, each group of usage timing association records contains usage status information of the applications corresponding to *n* sampling time points, where *n* is an integer greater than or equal to 2, then each LSTM cell layer contains *n* LSTM cell structures. FIG. 4 is a schematic structural diagram illustrating an application predictive model constructed according to a LSTM neural network model according to an embodiment of the disclosure. As illustrated in FIG. 4, the application predictive model contains two LSTM cell layers, that is, a first LSTM cell layer B1 and a second LSTM cell layer B2.

The number of cells in the input layer (that is, the number of neurons in the input layer) can be determined according to the vector dimensions of each group of usage timing association records. As an example, if each group of usage timing association records contains usage status information of the applications corresponding to *n+1* sampling time points, the usage status information of the applications at the first to the $n^{th}$ sampling time point can be used to predict the usage status information of the applications at the $(n+1)^{th}$ sampling time point. For example, applications used at the first *n* sampling time points in each group of usage timing association records are used as input vectors to predict an application that will be used at time point *n+1*. To facilitate the understanding, an application $x_t$ used at time point *t* is expressed as $APP_t$, that is, usage status information of the applications at time point *t*. Based on this, a data format of training samples in the process of generating the application predication model is expressed as: $[APP_1, APP_2, \cdots, APP_{n-1}, APP_n] \rightarrow APP_{n+1}$, where $APP_1$ indicates an application used at the first sampling time point, $APP_2$ indicates an application used at the second sampling time point, $APP_{n-1}$ indicates an application used at the $(n-1)^{th}$ sampling time point, $APP_n$ indicates an application used at the $n^{th}$ sampling time point, and $APP_{n+1}$ indicates an application used at the $(n+1)^{th}$ sampling time point.

For example, if each group of usage timing association records contains usage status information of the applications corresponding to six sampling time points, then the usage status information of the applications at the first five sampling time points are used to predict the usage status information of the applications at the sixth sampling time point. For example, applications used at time points *T-4, T-3, T-2, T-1,* and *T* in each group of usage timing association records are used as input vectors to predict an application to be used at time point *T+1.* That is, a data format of the training samples in the process of generating the application predication model is expressed as: $[APP_{T-4}, APP_{T-3}, APP_{T-2}, APP_{T-1}, APP_T] \rightarrow APP_{T+1}$, where $APP_{T-4}$ indicates an application used at time point *T-4,* $APP_{T-3}$ indicates an application used at time point *T-3,* $APP_{T-2}$ indicates an application used at time point *T-2,* $APP_{T-1}$ indicates an application used at time point *T-1,* $APP_T$ indicates an application used at time point *T,* and $APP_{T+1}$ indicates an application to be used at time point *T+1.*

It is to be noted that the number of cells of the input layer is equal to the number of LSTM cell structures in each LSTM cell layer.

The number of cells of the output layer of the application predictive model can be determined according to the number of the at least two applications. As an example, the at least two applications are embodied as *M* applications, that is, the application predictive model is established according to usage timing association records of the *M* applications, and the number of cells of the output layer of the application predictive model is *M+1* (including a situation where no application is in use).

In one implementation, during generating the application predictive model by training the LSTM network according to multiple groups of usage timing association records, the application predictive model adopts an error function, which is a cross entropy loss function expressed as:
$$J = \sum_{k=1}^{C} y_k \log(y_k),$$
where $y_k$ indicates an actual value of usage status information of each application, $y_k$ indicates a predicted value of the usage status information of each application, $C = M + 1$, *M* indicates the number of the at least two applications, and *J* indicates a cross entropy of the application predictive model. In this way, the preset neural network parameters can be further optimized, a better application predictive model can be obtained, and the accuracy of predicting an application to-be-launched can be further improved.

In the foregoing embodiments, $APP_{T+1}$ may be in the form of one-hot code, that is, the usage status information of the applications is unique at time point *T+1.* For example, the target applications include *M* target applications, which are marked with 1, 2,..., and *M* individually. In addition, use *M+1* to indicate a situation where no application is in use. In particular, *M* = 10 and an application marked with 5 is in use at time point *T+1,* then a predicted code vector is [0,0,0,0,1,0,0,0,0,0,0] at time point t+1; as can be seen, an element corresponding serial number 5 is 1, and the rest elements are all 0.

During training the LSTM network with the random gradient descent method, the training can be completed when a loss value is equal to or less than a preset loss threshold. Alternatively, the training can be completed when two or more loss values acquired continuously remain unchanged. After the training is completed, each parameter in the application predictive model at this time can be acquired and saved as optimal parameters. The optimal parameters can be used for prediction when we need to predict an application through the application predictive model. In particular, the random gradient descent method can be conducted with small batches to obtain the optimal parameters, for example, the batch size is 128.

According to the embodiments of the disclosure, the application predictive model can be generated by grouping the usage timing association records of the applications within the preset time period into multiple groups of usage timing association records and inputting the multiple groups of usage timing association records as the training samples into the LSTM network for training. In this way, the usage timing association records of the applications, which accurately reflect behaviors of the user, can be by fully used to optimize application preloading mechanisms. In addition, the disclosure also has advantages of effectively dealing with the exploding and vanishing gradient problems that may be encountered when the application predication model according to simple RNN, which can further improve the precision of training of the application predictive model and improve the accuracy of the prediction for an application-to-be-launched.

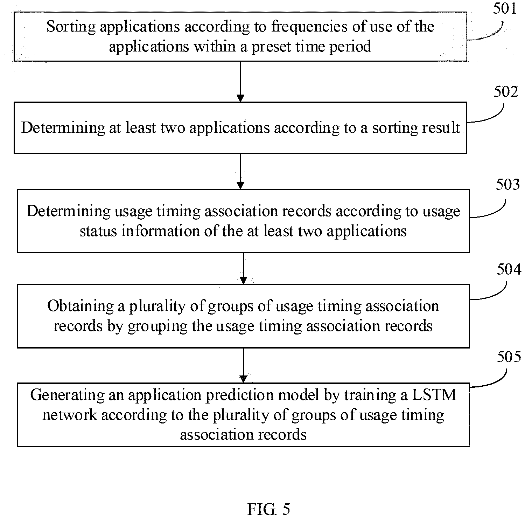

FIG. 5 is a schematic flow chart illustrating a method for establishing an application predictive model according to another embodiment of the disclosure. The method begins at block 501.

At block 501, applications are sorted according to frequencies of use of applications within the preset time period.

At block 502, at least two applications are determined according to a sorting result.

At block 503, usage timing association records are determined according to usage status information of the at least two applications.

At block 504, multiple groups of usage timing association records are obtained by grouping the usage timing association records.

At block 505, an application predictive model is generated by training a LSTM network according to the multiple groups of usage timing association records.

According to the embodiments of the disclosure, the usage timing association records of the applications, which accurately reflect behaviors of the user, can be by fully used to optimize application preloading mechanisms, and the precision of predicting the application predictive model can be effectively improved, thus further improving the accuracy of the prediction for an application-to-be-launched.

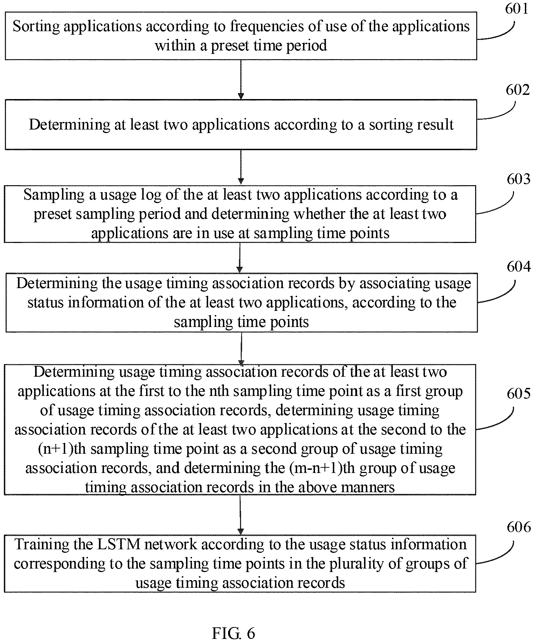

FIG. 6 is a schematic flow chart illustrating a method for establishing an application predictive model according to yet another embodiment of the disclosure. The method begins at block 601.

At block 601, applications are sorted according to frequencies of use of the applications within the preset time period.

At block 602, at least two applications are determined according to a sorting result.

At block 603, a usage log of the at least two applications is sampled according to a preset sampling period and whether the at least two applications are in use at sampling time points is determined.

At block 604, the usage timing association records are determined by associating usage status information of the at least two applications, according to the sampling time points.

At block 605, usage timing association records of the at least two applications at the first to the $n^{th}$ sampling time point are determined as a first group of usage timing association records, usage timing association records of the at least two applications at the second to the $(n+1)^{th}$ sampling time point are determined as a second group of usage timing association records, and so on, and the $(m-n+1)^{th}$ group of usage timing association records is determined in the above manners.

In particular, $n$ is a natural number greater than or equal to 2 and $m$ indicating the number of sampling time points is a natural number greater than or equal to 3.

At block 606, the LSTM network is trained according to the usage status information corresponding to the sampling time points in the multiple groups of usage timing association records.

With aid of the technical solutions of the disclosure, the usage timing association records of the applications within the preset time period can be more flexibly acquired, the precision of establishing the application predictive model and the prediction accuracy for an application to-be-launched can be improved.

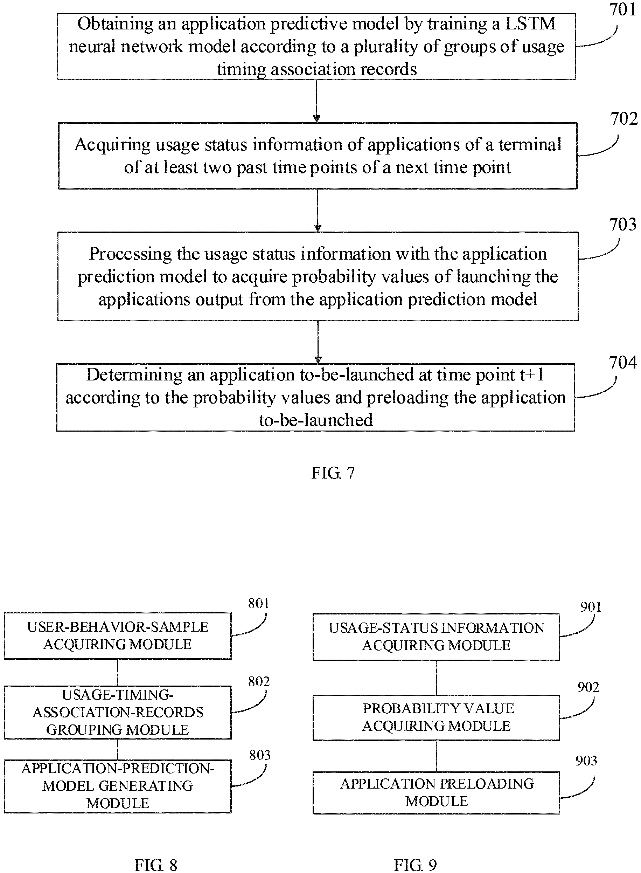

FIG. 7 is a schematic flow chart illustrating a method for preloading an application according to an embodiment of the disclosure. The method can be implemented by an apparatus for preloading an application, where the apparatus can be implemented through software and/or hardware. The apparatus can be integrated into a terminal. As illustrated in FIG. 7, the method begins at block 701.

At block 701, an application predictive model is obtained by training a long short-term memory (LSTM) neural network model according to multiple groups of usage timing association records. Reference can be made to the foregoing description in regards of the method of establishing an application predictive model in conjunction with FIG.1 to FIG.6.

In one implementation, the application predictive model can be obtained as follows. Usage timing association records of at least two applications within a preset time period are acquired. The multiple groups of usage timing association records are acquired by grouping the usage timing association records. The LSTM neural network model is trained according to the multiple groups of usage timing association records to obtain the application predictive model.

The usage timing association records of the at least two applications within the preset time period can be acquired as follows. Applications are sorted according to frequencies of use thereof within the preset time period. The at least two applications are determined according to a sorting result. The usage timing association records are determined according to usage status information of the at least two applications.

In one implementation, the usage timing association records are determined according to usage status information of the at least two applications as follows. A usage log of the at least two applications is sampled according to a preset sampling period and whether the at least two applications are in use at sampling time points in the preset sampling period is determined. The usage timing association records are determined by associating the usage status information of the at least two applications according to the sampling time points.

In one implementation, the LSTM neural network model is trained according to the multiple groups of usage timing association records as follows. The LSTM neural network model is trained according to the usage status information of the at least two applications at the sampling time points in the multiple groups of usage timing association records.

In one implementation, prior to the sorting, for each application, usage records in which the application is used shorter than a preset period are filtered out, and a frequency of use of the application is determined according to usage records after the filtering.

In one implementation, the multiple groups of usage timing association records are obtained with aid of a sliding window. For example, a sliding window is applied to the usage timing association records of the at least two applications within the preset time period, and usage timing association records corresponding to the sliding window at each position are determined as one group of usage timing association records.

At block 702, usage status information of applications of a terminal of at least two past time points of a next time point is acquired. For example, the at least two past time points refer to the most recent at least two time points, for example, include current time point $t$ and historical time point $t-1$ to time point t-n, n is an integer greater than or equal to 2.

In one embodiment, the time point $t$ can be understood as the current time point, and correspondingly, acquiring the usage status information of the applications of the terminal at time point $t$ can be understood as acquiring the current usage status information of the applications of the terminal. Correspondingly, acquiring the usage status information of the applications at time point $t-1$ to time point $t-n$ can be understood as acquiring usage status information of the applications corresponding to the first $n$ time points before the current time point respectively. The usage status information of the applications includes two situations, that is, one situation is that an application is in use and the other situation is that no application is in use. If there is an application that is currently in use, the usage status information will be marked with identification information or icon information corresponding to the application that is currently in use. On the other hand, if no application is currently in use, the usage status information can be marked with identification information indicating that currently there is no application in use. It should be noted that the usage status information of the applications can also be recorded in other forms.

At block 703, probability values of launching the applications are acquired from the application predictive model, by processing the usage status information of the applications with the application predictive model. For example, the usage status information is input into the pre-trained application predictive model and probability values of launching applications output from the pre-trained application predictive model are acquired.

In particular, the application predictive model is generated by training a LSTM network according to multiple groups of usage timing association records. The multiple groups of usage timing association records are obtained by grouping usage timing association records of the applications within a preset time period.

The probability values includes first probability values each indicating a probability of launching one of the applications and a second probability value indicating a probability of launching no application. In this embodiment, the usage status information of the applications of the terminal at time point $t$ and the usage status information of the applications at time point $t-1$ to time point $t-n$ are input into the pre-trained application predictive model, to obtain the probability value of launching an application from the pre-trained application predictive model. As an example, $[APP_{t-n}, APP_{t-n+1},\cdots,APP_{t\_1}, APP_t]$ is input into the pre-trained application predictive model as an input vector, where $APP_{t\_n}$ indicates an application used at time point $t-n$, $APP_{t\_n+1}$ indicates an application used at time point $t-n+1$, $APP_{t-1}$ indicates an application used at time point $t-1$, and $APP_T$ indicates an application used at time point $t$ (current time point). For example, the application predictive model is generated by training multiple groups of usage timing association records of the $M$ applications within the preset period. When predicating an application, the application predictive model can output $M+1$ probability values, where $M+1$ probability values (that is, the first probability values) include probability values of launching $M$ applications and a probability value (that is, the second probability value) of no application being in use.

At block 704, an application to-be-launched at the next time point, such as at time point $t+1$, is determined according to the probability values and the application to-be-launched is preloaded.

In this embodiment of the disclosure, according to the probability values obtained at block 703, the application to be launched at time point $t+1$ can be determined. The application to be launched at time point $t+1$ can be deemed as an application that will be launched at the next time point of the current time point. It can be appreciated that, the usage status information of the applications at time point $t$ (the current time point) and the usage status information of the applications at time point $t-1$ to time point $t-n$ ($n$ time points before the current time point) are input into the pre-trained application predictive model as input vectors, so as to predict usage status information of the applications at time point $t+1$ (the next time point of the current time). That is, a data format for predicting corresponding usage status information of an application at the next time point through the pre-trained application predictive model is $[APP_{t-n}, APP_{t-n+1},\cdots, APP_{t-1}, APP_t] \rightarrow APP_{t+1}$, where $APP_{t+1}$ indicates usage status information of an application at time point $t+1$ (the next time point of the current time point), that is, an application to be used at time point $t+1$.

For example, an application corresponding to the largest probability value among the probability values obtained at block 703 can be determined as the application to-be-launched. When no application has the largest probability value, an application corresponding to the second largest probability value can be determined as the application to-be-launched. Preload the application to-be-launched, such that when the user uses the application to-be-launched, usage efficiency and fluency can be improved.

With aid of the method for preloading an application, problems raised if too many application resources are preloaded, such as too many resources are took up, power consumption becomes large, and impact on the use of the terminal can be solved. In addition, the disclosure has advantages of effectively improving the accuracy of predicting an application to-be-launched, further reducing power consumption and memory occupation rate of a system of the terminal and optimizing application preloading mechanisms.

FIG. 8 is a schematic structural diagram illustrating an apparatus for establishing an application predictive model according to an embodiment of the disclosure. The apparatus can be implemented with software and/or hardware and generally can be integrated into a terminal, such as a server. The application predictive model can be established through the foregoing method for establishing an application predictive model. As illustrated in FIG. 8, the apparatus includes a user-behavior-sample acquiring module 801, a usage-timing-association-records grouping module 802, and an application-prediction-model generating module 803.

The user-behavior-sample acquiring module 801 is configured to acquire a user behavior sample within a preset time period, where the user behavior sample includes usage timing association records of at least two applications.

The usage-timing-association-records grouping module 802 is configured to obtain multiple groups of usage timing association records by grouping the usage timing association records.

The application-prediction-model generating module 803 is configured to generate an application predictive model by training a preset LSTM neural network model according to the multiple groups of usage timing association records.

According to the embodiments of the disclosure, the usage timing association records of the applications that accurately reflect behaviors of the user can be fully used. In addition, the disclosure also has advantages of effectively dealing with the exploding and vanishing gradient problems that may be encountered when training an application predication model according to simple RNN, which can further improve the precision of training of the application predictive model and improve the accuracy of the prediction for an application-to-be-launched.

The user-behavior-sample acquiring module 801 include an application sorting unit, a target application determining unit, and a usage-timing-association-records determining unit. The application sorting unit is configured to sort applications according to frequencies of use of applications within the preset time period. The target application determining unit is configured to determine at least two applications according to a sorting result. The usage-timing-association-records determining unit is configured to determine usage timing association records as the user behavior sample, according to usage status information of the at least two applications.

The usage-timing-association-records determining unit configured to determine the usage timing association records as the user behavior sample, according to the usage status information of the at least two applications is configured to: sample a usage log of the at least two applications according to a preset sampling period and determine whether the at least two applications are in use at sampling time points; determine the usage timing association records by associating the usage status information of the at least two applications, according to the sampling time points and the usage status information.

The application-prediction-model generating module 803 configured to train the LSTM neural network model according to the multiple groups of usage timing association records is configured to train the LSTM neural network model according to the usage status information of the at least two applications at the sampling time points in the multiple groups of usage timing association records.

The usage-timing-association-records grouping module 802 configured to obtain multiple groups of usage timing association records by grouping the usage timing association records is configured to: determine usage timing association records of the at least two applications at the first to the $n^{th}$ sampling time point as a first group of usage timing association records; determine usage timing association records of the at least two applications at the second to the $(n+1)^{th}$ sampling time point as a second group of usage timing association records; determine the $(m-n+1)^{th}$ group of usage timing association records in the above manners, where $n$ is a natural number greater than or equal to 2 and $m$ indicating the number of sampling time points is a natural number greater than or equal to 3.

The application predictive model includes an input gate $i_t$, a forget gate $f_t$, an output gate $o_t$, a candidate memory cell $\tilde{c}_t$, a final memory cell $c_t$, and an output status cell $h_t$, which are expressed as follows:

$$i_t = \sigma(W_i x_t + U_i h_{t-1})$$

$$f_t = \sigma(W_f x_t + U_f h_{t-1})$$

$$o_t = \sigma(W_o x_t + U_o h_{t-1})$$

$$\tilde{c}_t = \tanh(W_c x_t + U_c h_{t-1})$$

$$c_t = f_t \otimes c_{t-1} + i_t \otimes \tilde{c}_t$$

$$h_t = o_t \otimes \tanh(c_t)$$

where $x_t$ indicates an application used at time point $t$ in the usage timing association records, $W_*$ and $U_*$ indicate network parameters learned, $i_t$ indicates an input gate at time point $t$, $f_t$ indicates a forget gate at time point $t$, $o_t$ indicates an output gate at time point $t$, $c_t$ indicates a final memory cell at time point $t$, $C_{t-1}$ indicates a final memory cell at time point $t-1$, $\tilde{c}_t$ indicates a candidate memory cell at time point $t$, $h_t$ indicates an output status cell at time point $t$, $h_{t-1}$ indicates an output status cell at time point $t-1$, $\sigma$ indicates a Sigmoid function, $\otimes$ indicates element-wise product of vectors, and the *tanh* function is expressed as

$$f(x) = \tanh(x) = \frac{e^x - e^{-x}}{e^x + e^{-x}}.$$

In one implementation, the number of cells of an input layer of the application predictive model can be determined according to vector dimensions of each group of usage timing association records. The number of cells of an output layer of the application predictive model can be determined according to the number of the at least two applications.

In one implementation, the application prediction model adopts an error function, which is a cross en-

23 **EP 3 486 769 A1** 24

tropy loss function expressed as:

$$J = \sum_{k=1}^{C} y_k \log(y_k)$$

$y_k$ indicates an actual value of usage status information of each application, $y_k$ indicates a predicted value of the usage status information of each application, $C = M +1$, $M$ indicates the number of the at least two applications, and $J$ indicates a cross entropy of the application predictive model.

FIG. 9 is a schematic structural diagram illustrating an apparatus for preloading an application according to an embodiment of the disclosure. The apparatus can be implemented with software and/or hardware, and generally can be integrated into a terminal. An application to-be-launched can be preloaded by executing a method for preloading an application. As illustrated in FIG. 9, the apparatus includes a usage-status information acquiring module 901, a probability value acquiring module 902, and an application preloading module 903. These functionally units can be integrated into a processor for example.

The usage-status information acquiring module 901 is configured to acquire usage status information of applications of a terminal at time point $t$ and usage status information of the applications at time point $t-1$ to time point $t-n$, where $n$ is a natural number greater than or equal to 2.

The probability value acquiring module 902 is configured to input the usage status information into a pre-trained application predictive model and acquire probability values of launching each application output from the pre-trained application predictive model, where the application predictive model is generated by training a preset LSTM neural network model according to multiple groups of usage timing association records, and the multiple groups of usage timing association records are obtained by grouping usage timing association records of the applications within a preset time period.

The application preloading module 903 is configured to determine an application to-be-launched at time point $t+1$ according to the probability values and to preload the application-to be-launched.

With aid of technical solutions of the disclosure, problems raised if too many application resources are preloaded, such as too many resources are took up, power consumption becomes large, and impact on the use of the terminal can be solved. In addition, the disclosure has advantages of effectively improving the accuracy of predicting an application to-be-launched, further reducing power consumption and memory occupation rate of a system of the terminal, and optimizing application preloading mechanisms.

According to embodiments of the disclosure, a storage medium is provided. The computer storage medium can be configured to store computer executable instructions. The computer executable instructions are operable with a processor to execute the method for establishing an application predictive model. The method includes the following.

A user behavior sample within a preset time period is acquired, where the user behavior sample includes usage timing association records of at least two applications. Multiple groups of usage timing association records are obtained by grouping the usage timing association records. An application predictive model is generated by training a preset LSTM neural network model according to the multiple groups of usage timing association records.

The storage medium refers to any of various types of memory devices or storage devices. The term "storage medium" is intended to include: a mounting medium such as a compact disc read-only memory (CD-ROM), a floppy disk, or a tape device; computer system memory or random access memory such as a dynamic random access memory (DRAM), a display data random access memory (DDRRAM), a static random access memory (SRAM), an extended data output random access memory (EDORAM), and a Rambus random access memory (Rambus RAM); non-transitory memory such as a flash memory and a magnetic medium (for example, a hard disk or an optical memory); a register and other similar types of memory element, and the like. The storage medium may also include other types of memory or a combination thereof. In addition, the storage medium may be located in a first computer system in which a program is executed, or may be located in a second computer system coupled to the first computer system via a network, such as the Internet. The second computer system can provide program instructions to the first computer for execution. The term "storage medium" can include two or more storage media that can reside in different locations (e.g. different computer systems connected through a network). The storage medium may store program instructions (e.g. computer programs) executable by one or more processors.

In the embodiments of the disclosure, the computer executable instructions contained in the storage medium are not limited to executing the operations of establishing an application predictive model as described above, and can also execute relevant operations in the method for establishing an application predictive model according to the embodiments of the disclosure.

According to an embodiment of the disclosure, another computer storage medium is provided. The computer storage medium can be configured to store computer executable instructions. The computer executable instructions are operable with a processor to execute the method for preloading an application. The method includes the following.

Usage status information of applications of a terminal at time point $t$ and usage status information of the applications at time point $t-1$ to time point $t-n$ are acquired, where $n$ is a natural number greater than or equal to 2. The usage status information is input into a pre-trained application predictive model and probability val-

13

ues of launching each application output from the pre-trained application predictive model are acquired, where the application predictive model is generated by training a preset LSTM neural network model according to multiple groups of usage timing association records, and the multiple groups of usage timing association records are obtained by grouping usage timing association records of the applications within a preset time period. An application to-be-launched at time point $t+1$ is determined according to the probability values and the application to-be-launched is preloaded.

The specific details of the computer storage medium in the embodiments of the disclosure are similar to the computer storage medium described above, which are not described herein.

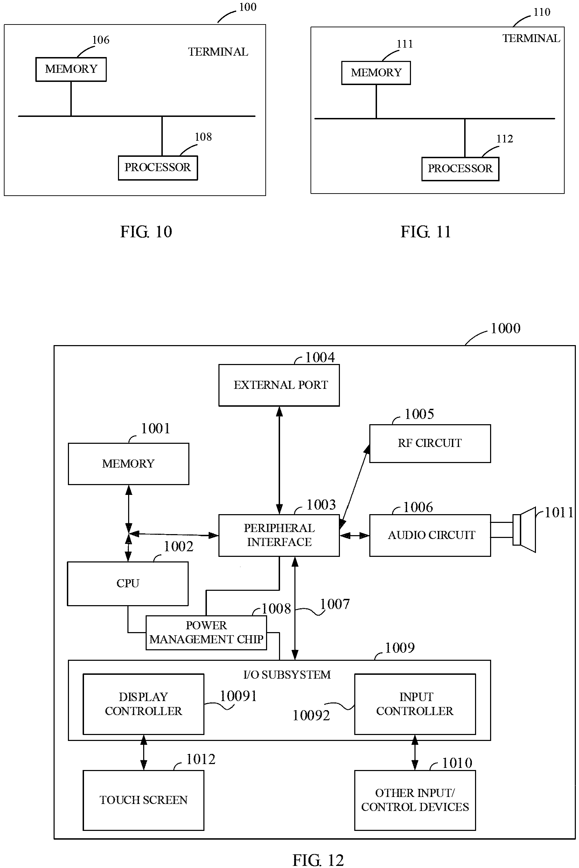

According to an embodiment of the disclosure, a terminal is provided. An apparatus for establishing an application predictive model described in the embodiments of the disclosure can be integrated into the terminal. FIG. 10 is a schematic structural diagram illustrating the terminal according to an embodiment of the disclosure. As illustrated in FIG. 10, a terminal 100 includes a memory 106, a processor 108, and computer programs stored in the memory 106. The processor 108 can be configured to execute the method for establishing an application predictive model when executing the computer programs.

The terminal described in the embodiment of the disclosure can fully use the usage timing association records of the applications that accurately reflect behaviors of the user, to optimize application preloading mechanisms and to improve the accuracy of the prediction for an application-to-be-launched.

According to an embodiment of the disclosure, another terminal is provided. An apparatus for preloading an application described in the embodiments of the disclosure can be integrated into the terminal. The terminal device includes at least one processor and a computer readable storage coupled to the at least one processor and stores at least one computer executable instruction thereon. FIG. 11 is a schematic structural diagram illustrating a terminal according to another embodiment of the disclosure, in the form of a terminal includes a memory and a processor. As illustrated in FIG. 11, a terminal 110 may include a memory 111, a processor 112, and computer programs stored in the memory 111. The processor 112 can be configured to execute the method for preloading an application when executing the computer programs.

Specifically, the processor 112 is configured to acquire usage status information of applications of a terminal of at least two past time points, to acquire, from an application predictive model, probability values of launching the applications, by inputting the usage status information into the application predictive model, the application predictive model is obtained based on a long short-term memory (LSTM) neural network model and multiple groups of usage timing association records, and to determine an application to-be-launched at a next time point according to the probability values and to preload the application to-be-launched.

The processor 112 is further configured to train the LSTM neural network model according to the multiple groups of usage timing association records to obtain the application predictive model.

In terms of training the LSTM neural network model according to the multiple groups of usage timing association records to obtain the application predictive model, the processor 112 is configured to acquire usage timing association records of at least two applications within a preset time period by sampling a usage log of the at least two applications according to a preset sampling period and associating the usage status information of the at least two applications according to the sampling time points, to obtain the multiple groups of usage timing association records by grouping the usage timing association records, and to train the LSTM neural network model according to the multiple groups of usage timing association records to obtain the application predictive model.

In terms of obtaining the multiple groups of usage timing association records by grouping the usage timing association records, the processor 112 is configured to move forward a sliding window over the usage timing association records of the at least two applications within the preset time period, and to determine usage timing association records corresponding to the sliding window at each position as one group of usage timing association records.

The probability values include first probability values each indicating a probability of launching one of the applications and a second probability value indicating a probability of launching no application.

The terminal described in the embodiment of the disclosure can acquire usage status information of applications of a terminal at time point $t$ and usage status information of the applications at time point $t-1$ to time point $t-n$, where $n$ is a natural number greater than or equal to 2, can input the usage status information into a pre-trained application predictive model and can acquire probability values of launching each application output from the pre-trained application predictive model, where the application predictive model is generated by training a preset LSTM neural network model according to multiple groups of usage timing association records, and the multiple groups of usage timing association records are obtained by grouping usage timing association records of the applications within a preset time period, and can determine an application to-be-launched at time point $t+1$ according to the probability values and can preload the application to-be-launched. In this way, it is possible to solve problems raised if too many application resources are preloaded, such as too many resources are took up, power consumption becomes large, and impact on the use of the terminal. In addition, the disclosure has advantages of effectively improving the accuracy of predicting an application to-be-launched, further reducing power consumption and memory occupation rate of a system of the terminal, and optimizing application preloading mechanisms.

According to embodiments of the disclosure, a non-transitory computer readable storage medium is provided. The non-transitory computer readable storage medium stores a computer program which, when executed by a processor, causes the processor to: acquire a user behavior sample within a preset time period, the user behavior sample includes usage timing association records of at least two applications, to obtain multiple groups of usage timing association records by grouping the usage timing association records, and to train a LSTM neural network model according to the multiple groups of usage timing association records to obtain an application predictive model.

The processor is further configured to: acquire usage status information of applications of a terminal of at least two past time points, to acquire, from the application predictive model, probability values of launching the applications, by processing the usage status information of the applications with the application predictive model, and to determine an application to-be-launched at a next time point according to the probability values and preload the application to-be-launched.

FIG. 12 is a schematic structural diagram illustrating another terminal according to an embodiment of the present disclosure. As illustrated in FIG. 12, the terminal includes a housing (not illustrated), a memory 1001, and a central processing unit (CPU) 1002 (also referred as a processor, hereinafter referred as a CPU), a circuit board (not illustrated), and a power supply circuit (not illustrated). The circuit board is disposed inside a space defined by the housing. The CPU 1002 and the memory 1001 are disposed on the circuit board. The power supply circuit is configured to supply power to each circuit or component of the terminal. The memory 1001 is configured to store executable program codes. The CPU 1002 is configured to run a computer program corresponding to the executable program codes by reading out the executable program codes stored in the memory 1001 to carry out the following operations.

Usage status information of applications of a terminal at time point $t$ and usage status information of the applications at time point $t-1$ to time point $t-n$ are acquired, where $n$ is a natural number greater than or equal to 2. The usage status information is input into a pre-trained application predictive model and probability values of launching applications are acquired from the pre-trained application predictive model, where the application predictive model is generated by training a preset LSTM neural network model according to multiple groups of usage timing association records obtained by grouping usage timing association records of the applications within a preset time period. An application to-be-launched at time point $t+1$ is determined according to the probability values and then preloaded.

The terminal further includes a peripheral interface 1003, an radio frequency (RF) circuit 1005, an audio circuit 1006, a speaker 1011, a power management chip 1008, an input/output (I/O) subsystem 1009, other input/control devices 1010, a touch screen 1012, other input/control devices 1010, and an external port 1004, which are communicated via one or more communication buses or signal lines 1007.

It should be understood that a terminal 1000 illustrated is exemplary and the terminal 1000 may have more or fewer components than those illustrated in the figures. For example, two or more components may be combined, or different component configurations can be adopted in the terminal. The various components illustrated in the figures can be implemented in hardware, software, or a combination of hardware and software including one or more signal processing and/or application specific integrated circuits.

The following describes a terminal as an example of an apparatus for preloading an application.

The memory 1001 can be accessed by the CPU 1002, the peripheral interface 1003 and so on. The memory 1001 may include a high-speed random access memory and may further include a non-transitory memory such as one or more magnetic disk storage devices, flash memory devices, or other volatile solid-state memory devices.

The peripheral interface 1003 is configured to connect the input and output peripherals of the apparatus to the CPU 1002 and the memory 1001.

The I/O subsystem 1009 can be configured to connect the input and the output peripherals, such as the touch screen 1012 and other input/control devices 1010, to the peripheral interface 1003. The I/O subsystem 1009 may include a display controller 10091 and one or more input controllers 10092 configured to control other input/control devices 1010. One or more input controllers 10092 are configured to receive electrical signals from or send electrical signals to other input/control devices 1010, where other input/control devices 1010 may include a physical button (a press button, a rocker button, etc.), a dial, a slide switch, a joystick, or a click wheel. It should be noted that the input controller 10092 can be coupled with any of a keyboard, an infrared port, a USB interface, and a pointing apparatus such as a mouse.

The touch screen 1012 is an input interface and an output interface between a terminal and a user, and is configured to display a visual output to the user. The visual output may include graphics, text, icons, videos, and the like.

The display controller 10091 in the I/O subsystem 1009 is configured to receive an electrical signal from or send an electrical signal to the touch screen 1012. The touch screen 1012 is configured to detect contact on the touch screen, and the display controller 10091 is configured to convert the contact detected into an interaction with a user interface object displayed on the touch screen 1012, that is, to realize human-computer interaction. The user interface object displayed on the touch screen 1012 may be an icon of a running game, an icon indicating connection to corresponding networks, and the like. It should be noted that the device may also include a light mouse, which is a touch sensitive surface that does not display a visual output, or can be an extension of a touch sensitive surface formed by the touch screen.

The RF circuit 1005 is configured to establish communication between a mobile phone and the wireless network (i.e. network side) and to transmit and receive data between the mobile phone and the wireless network, for example, transmit and receive short messages, emails, and the like. The RF circuit 1005 is configured to receive and transmit RF signals (which is also known as electromagnetic signals), to convert an electrical signal into an electromagnetic signal or convert the electromagnetic signal into the electrical signal, and to communicate with a communication network and other devices through the electromagnetic signal. The RF circuit may include known circuits for performing these functions, including but not limited to an antenna system, an RF transceiver, one or more amplifiers, a tuner, one or more oscillators, a digital signal processor, a coder-decoder (codec) chipset, a subscriber identity module (SIM) and so on.

The audio circuit 1006 is configured to receive audio data from the peripheral interface 1003, to convert the audio data into an electric signal, and to transmit the electric signal to the speaker 1011.

The speaker 1011 is configured to restore the voice signal received by the mobile phone from the wireless network via the RF circuit 1005 to sound and to play the sound to the user.

The power management chip 1008 is configured for power supply and power management of the hardware connected to the CPU 1002, the I/O subsystem 1009, and the peripheral interfaces 1003.

The apparatus for establishing an application predictive model, the storage medium, and the terminal provided in the above embodiments have corresponding functional modules and can execute the corresponding method for establishing an application predictive model, and thus each contributes to advantageous effects of executing the method. For technical details not described herein, reference may be made to the description of the method for establishing an application predictive model.

The apparatus for preloading an application, the storage medium, and the terminal provided in the above embodiments have corresponding functional modules and can execute the corresponding method for preloading an application, and thus each contributes to advantageous effects of executing the method. For technical details not described herein, reference may be made to the description of the method for preloading an application.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A method for preloading an application, comprising:

   obtaining (701) an application predictive model by training a long short-term memory, LSTM, neural network model according to a plurality of groups of usage timing association records;
   acquiring (702) usage status information of applications of a terminal of at least two past time points of a next time point;
   acquiring (703), from the application predictive model, probability values of launching the applications, by processing the usage status information of the applications with the application predictive model; and
   determining (704) an application to-be-launched at the next time point according to the probability values and preloading the application to-be-launched.

2. The method of claim 1, wherein the obtaining an application predictive model by training a LSTM neural network model according to a plurality of groups of usage timing association records comprises:

   acquiring usage timing association records of at least two applications within a preset time period;
   obtaining (504) the plurality of groups of usage timing association records by grouping the usage timing association records; and
   training (505) the LSTM neural network model according to the plurality of groups of usage timing association records to obtain the application predictive model.

3. The method of claim 2, wherein the acquiring usage timing association records of at least two applications within a preset time period comprises:

   sorting (501) applications according to frequencies of use of the applications within the preset time period;
   determining (502) the at least two applications according to a sorting result; and
   determining (503) the usage timing association records according to usage status information of the at least two applications.

4. The method of claim 3, wherein

the determining the usage timing association records according to usage status information of the at least two applications comprises:

sampling (603) a usage log of the at least two applications according to a preset sampling period and determining whether the at least two applications are in use at sampling time points in the preset sampling period; and
determining (604) the usage timing association records by associating the usage status information of the at least two applications according to the sampling time points;

the training the LSTM neural network model according to the plurality of groups of usage timing association records comprises:

training (606) the LSTM neural network model according to the usage status information of the at least two applications at the sampling time points in the plurality of groups of usage timing association records.

5. The method of claim 4, wherein the plurality of groups of usage timing association records are (m-n+1) groups of usage timing association records, n indicates the number of sampling time points associated with each of the plurality of usage timing association records and is an integer greater than or equal to 2, and m indicates the total number of sampling time points in the preset sampling period and is an integer greater than or equal to 3, wherein the $i^{th}$ group of usage timing association records comprises usage timing association records of the at least two applications at the $i^{th}$ to the $(i+n-1)^{h}$ sampling time point, and i is an integer and ranges from 1 to (m-n+1).

6. The method of any one of claims 3 to 5, wherein the method further comprises the follows prior to the sorting applications according to frequencies of use of the applications within the preset time period:

for each application, filtering out usage records in which the application is used shorter than a preset period; and
determining a frequency of use of the application according to usage records after the filtering.

7. The method of any one of claims 2 to 6, further comprising:

determining the number of cells of an input layer of the application predictive model according to vector dimensions of each of the plurality of groups of usage timing association records; and
determining the number of cells of an output layer of the application predictive model according to the number of the at least two applications.

8. The method of claim 7, wherein the application predictive model adopts an error function, which is a cross entropy loss function expressed as:

$$J = \sum_{k=1}^{C} y_k \log(y_k),$$

wherein $y_k$ indicates an actual value of usage status information of each application, $y_k$ indicates a predicted value of the usage status information of each application, $C = M + 1$, $M$ indicates the number of the at least two applications, and $J$ indicates a cross entropy of the application predictive model.

9. The method of claim 2, wherein the obtaining the plurality of groups of usage timing association records by grouping the usage timing association records comprises:

applying a sliding window to the usage timing association records of the at least two applications within the preset time period; and
determining usage timing association records corresponding to the sliding window at each position as one group of usage timing association records.

10. The method of any one of claims 1 to 9, the application predictive model comprising an input gate $i_t$, a forget gate $f_t$, an output gate $o_t$, a candidate memory cell $\tilde{c}_t$, a final memory cell $c_t$, and an output status cell $h_t$, which are expressed as follows:

$$i_t = \sigma(W_i x_t + U_i h_{t-1})$$

$$f_t = \sigma(W_f x_t + U_f h_{t-1})$$

$$o_t = \sigma(W_o x_t + U_o h_{t-1})$$

$$\tilde{c}_t = \tanh(W_c x_t + U_c h_{t-1})$$

$$c_t = f_t \otimes c_{t-1} + i_t \otimes \tilde{c}_t$$

$$h_t = o_t \otimes \tanh(c_t)$$

$x_t$ indicating an application used at time point $t$ in the usage timing association records; $W_*$ and $U_*$ indicating network parameters learned, and $* \in \{i, f, o,$

$c$} ; $i_t$ indicating an input gate at time point $t$, $f_t$ indicating a forget gate at time point $t$, and $o_t$ indicating an output gate at time point $t$; $c_t$ indicating a final memory cell at time point $t$, $c_{t-1}$ indicating a final memory cell at time point $t-1$, and $\tilde{c}_t$ indicating a candidate memory cell at time point $t$; $h_t$ indicating an output status cell at time point $t$, and $h_{t-1}$ indicating an output status cell at time point $t-1$; $\sigma$ indicating a Sigmoid function; $\otimes$ indicating element-wise product of vectors; the *tanh* function being expressed as

$$f(x) = \tanh(x) = \frac{e^x - e^{-x}}{e^x + e^{-x}} \; .$$

11. The method of any one of claims 1 to 10, wherein the probability values comprise first probability values each indicating a probability of launching one of the applications and a second probability value indicating a probability of launching no application.

12. A terminal device (110), comprising:

   at least one processor (112); and
   a computer readable storage (111), coupled to the at least one processor and storing at least one computer executable instruction thereon which, when executed by the at least one processor, causes the at least one processor to carry out the method of any one of claims 1 to 11.

13. A non-transitory computer readable storage medium storing a computer program which, when executed by a processor, causes the processor to carry out the method of any one of claims 1 to 11.

Acquiring usage timing association records within a preset time period — 101

Obtaining a plurality of groups of usage timing association records by grouping the usage timing association records — 102

Generating an application prediction model by training a preset long short-term memory (LSTM) neural network model according to the plurality of groups of usage timing association records — 103

FIG. 1

A                                                                    A

SLIDING WINDOW ➡                              SLIDING WINDOW ➡

T-N+1      T-N+2              T-1          T              T+1          T+2

...

T-N        T-N+1              T-2          T-1            T            T+1

Position a                    Position b

FIG. 2

FIG. 3

FIG. 4

Sorting applications according to frequencies of use of the applications within a preset time period — 501

Determining at least two applications according to a sorting result — 502

Determining usage timing association records according to usage status information of the at least two applications — 503

Obtaining a plurality of groups of usage timing association records by grouping the usage timing association records — 504

Generating an application prediction model by training a LSTM network according to the plurality of groups of usage timing association records — 505

FIG. 5

Sorting applications according to frequencies of use of the applications within a preset time period — 601

Determining at least two applications according to a sorting result — 602

Sampling a usage log of the at least two applications according to a preset sampling period and determining whether the at least two applications are in use at sampling time points — 603

Determining the usage timing association records by associating usage status information of the at least two applications, according to the sampling time points — 604

Determining usage timing association records of the at least two applications at the first to the nth sampling time point as a first group of usage timing association records, determining usage timing association records of the at least two applications at the second to the (n+1)th sampling time point as a second group of usage timing association records, and determining the (m-n+1)th group of usage timing association records in the above manners — 605

Training the LSTM network according to the usage status information corresponding to the sampling time points in the plurality of groups of usage timing association records — 606

FIG. 6

Obtaining an application predictive model by training a LSTM neural network model according to a plurality of groups of usage timing association records — 701

Acquiring usage status information of applications of a terminal of at least two past time points of a next time point — 702

Processing the usage status information with the application prediction model to acquire probability values of launching the applications output from the application prediction model — 703

Determining an application to-be-launched at time point t+1 according to the probability values and preloading the application to-be-launched — 704

FIG. 7

USER-BEHAVIOR-SAMPLE ACQUIRING MODULE — 801

USAGE-TIMING-ASSOCIATION-RECORDS GROUPING MODULE — 802

APPLICATION-PREDICTION-MODEL GENERATING MODULE — 803

FIG. 8

USAGE-STATUS INFORMATION ACQUIRING MODULE — 901

PROBABILITY VALUE ACQUIRING MODULE — 902

APPLICATION PRELOADING MODULE — 903

FIG. 9

100

106

MEMORY

TERMINAL

108

PROCESSOR

FIG. 10

110

111

MEMORY

TERMINAL

112

PROCESSOR

FIG. 11

1000

1004

EXTERNAL PORT

1005

RF CIRCUIT

1001

MEMORY

1003

PERIPHERAL INTERFACE

1006

AUDIO CIRCUIT

1011

1002

CPU

1008

POWER MANAGEMENT CHIP

1007

1009

I/O SUBSYSTEM

DISPLAY CONTROLLER

10091

10092

INPUT CONTROLLER

1012

TOUCH SCREEN

1010

OTHER INPUT/ CONTROL DEVICES

FIG. 12

Europäisches
Patentamt

European
Patent Office

Office européen
des brevets

# EUROPEAN SEARCH REPORT

Application Number

EP 18 19 5155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/005736 A1 (APACIBLE JOHNSON T [US] ET AL) 3 January 2008 (2008-01-03) * the whole document * ----- | 1-13 | INV. G06F9/445 ADD. G06F8/30 |

TECHNICAL FIELDS
SEARCHED     (IPC)

G06F

The present search report has been drawn up for all claims

| Place of search | Date of completion of the search | Examiner |
|---|---|---|
| Munich | 22 March 2019 | Gafita, Cristinel |

EPO FORM 1503 03.82 (P04C01)

**ANNEX TO THE EUROPEAN SEARCH REPORT
ON EUROPEAN PATENT APPLICATION NO.**

EP 18 19 5155

This annex lists the patent family members relating to the patent documents cited in  the above-mentioned European search report.
The members are as contained in the European Patent Office EDP file on
The European Patent Office is in no way liable for these particulars which are merely given for the purpose of information.

22-03-2019

| Patent document cited in search report | Publication date | Patent family member(s) | Publication date |
|---|---|---|---|
| US 2008005736 A1 | 03-01-2008 | NONE | |

For more details about this annex : see Official Journal of the European Patent Office, No. 12/82